# EUROPEAN PATENT APPLICATION

(11) **EP 1 770 379 A1**
(43) Date of publication of application: **04.04.2007**
(21) Application number: 05109016.5
(22) Date of filing: 29.09.2005
(51) Int. Cl.: G01F 23/00, D06F 39/02, F04B 49/10, A47L 15/44, G05D 9/00

(54) **Device and method for detecting the presence of a gas in a liquid flow**

(71) Applicant: JohnsonDiversey, Inc., Sturtevant, WI 53177-0902 (US)
(72) Inventor: Vrijheid, Lammert, 8072 DW, Nunspeet (NL)
(74) Representative: Voncken, Bartholomeus Maria Ch.

(57) **Abstract**

Device and method for detecting the presence of a gas in a liquid flow. There are provided a liquid line, a detector capable of distinguishing between a liquid and a gas positioned alongside the liquid line, said detector monitoring the liquid flow through the liquid line, and retarding means for temporarily slowing down the flow of any gas in the liquid line in the immediate vicinity of the detector.

## Description

The invention firstly relates to a device for detecting the presence of a gas in a liquid flow.

On many fields it is desirable to detect the presence of a gas in a liquid flow. By way of non-limiting example the use of such a device is mentioned in a container for a liquid cleaning substance, such as for example for use with industrial dish washers. At the moment when the container becomes (nearly) empty a warning signal should be delivered such that the container can be replaced by a full one (or can be filled) on time before the supply of liquid towards the dishwasher is interrupted. The presence of gas in the liquid flow generally will indicate such a moment.

A state of the art device for detecting the presence of a gas in a liquid flow may comprise a float positioned near to the bottom of the container and connected to signalling means. Because, however, such containers often are very wide having a bottom with a large surface, it is very difficult to avoid that the float already triggers the "empty" signal when still a substantial amount of liquid is present in the container. As a result, often considerable amounts of such a liquid, representing a substantial investment, are discarded and, in the case where empty containers are returned to the manufacturer of the cleaning substance for a subsequent refilling, unduly heavy containers have to be transported.

To overcome these problems, another state of the art device for detecting the presence of a gas in a liquid flow has been developed, in which the float was positioned in a housing at the top of a riser to be positioned into the container. An example of such a state of the art is shown in WO99/24353. However, such a device has the distinct disadvantage, that its switching moment is very difficult to determine and very critical in its setting (and among others, depends upon the specific weight of the liquid and the flow velocity of the liquid), and thus cannot easily be used when measuring small amounts of the liquid at a low velocity.

Thus, it is an object of the present invention to provide an improved device for detecting the presence of a gas in a liquid flow.

In accordance with the present invention a device for detecting the presence of a gas in a liquid flow is provided, characterised by a liquid line, a detector positioned alongside the liquid line and capable of distinguishing between a liquid and a gas, said detector monitoring the liquid flow through the liquid line, and retarding means for temporarily slowing down the flow of any gas in the liquid line in the immediate vicinity of the detector.

The retarding means provided slow down the flow of gas in the liquid line sufficiently to enable the detector to reliably determine the presence of the gas in the liquid flow. The correct functioning of the detector will be rather independent from a number of characteristics, such as the specific weight of the liquid, the velocity of the liquid flow and the characteristics of the gas (among which the dimensions of gas bubbles). As a result, the device according to the present invention is extremely fit to determine whether a container from which the liquid flow is obtained, is empty or nearly empty.

For realising the retarding means different solutions are conceivable. Thus, in a preferred embodiment of the device according to the present invention, the retarding means comprise a bend in the liquid line where, as seen in the direction of the liquid flow, a substantially vertical section of the liquid line is followed by a substantially horizontal section of the liquid line.

When the liquid flow has to change its direction of motion from vertically to horizontally at said bend, it is slowed down considerably, again providing the detector with enough time to reliably detect the presence of any gas in the liquid line.

Although any bend in the liquid line already will have a retarding effect in the sense of the present invention, it is especially preferred, that the angle between the vertical and horizontal liquid line sections is substantially 90°. In such a case, a fair compromise is obtained between the retarding effect and still good flow characteristics of the liquid flow (i.e. keeping the flow resistance as low as possible).

Apart from, or in addition to, the bend in the liquid line, also other retarding means could be applied. As one non-restricting example thereof, restriction means are mentioned which are positioned in the liquid line. Such restriction means again will function as means for temporarily slowing down the flow of any gas in the liquid line in the immediate vicinity of the detector, thus again allowing the detector to reliably detect the presence of any gas in the liquid line. For example, such restriction means could comprise wall sections extending partially into the liquid line (preferably transversally thereto). However, also other restriction means are conceivable, such as differently shaped bodies positioned within the liquid line. The shape of such bodies should be chosen in such a manner, that at least at one location within the liquid line in the immediate vicinity of the detector the flow of any gas in the liquid line is at least temporarily slowed down.

In a preferred embodiment of the device according to the present invention, the detector comprises a capacity detector. As a result, no physical contact is needed between the detector and the liquid flow because such a detector can act across the wall of the liquid line.

However, also other types of detector could be used in the device according to the present invention, such as, for example, detectors operating on the basis of light transmission, conductivity, ultrasonic sound or alike.

The invention secondly relates to an apparatus for delivering a liquid from a container, comprising a riser positionable into the container and a delivery line connected to the riser, and further comprising pumping means for creating a liquid flow from the container into the riser and towards the delivery line, and provided with a device according to any of the previous claims.

The use of a device in accordance with the first aspect of the present invention in an apparatus according to the second aspect of the invention offers the advantage, that a reliable determination can be carried out of the moment, at which the container will be empty of nearly empty, thus avoiding the detrimental effects already discussed above.

In a preferred embodiment of such an apparatus, in which the device provided comprises a bend as discussed above, the vertical liquid line section is part of the riser, whereas the horizontal liquid line section is part of the delivery line. As a result, the device according to the present invention can be realised in such an apparatus without many additional constructional features to be realised.

In a third aspect, the invention relates to an assembly of container for a liquid and apparatus according to the second aspect of the invention. Preferably, such an assembly is of the type, in which the liquid is a cleaning substance, such as for example for use with industrial dish washers.

In a fourth aspect, the invention relates to a method for detecting the presence of a gas in a liquid flowing through a liquid line. In accordance with the present invention, such a method is characterized by temporarily slowing down the flow of any gas in the liquid line by retarding means, positioning a detector alongside the liquid line in the immediate vicinity of the retarding means, which detector is capable of distinguishing between a liquid and a gas, and monitoring the liquid flow through the liquid line by means of the detector.

Hereinafter the invention will be elucidated while referring to the drawing, in which embodiments thereof are illustrated.
Figure 1 shows schematically and in a side elevational view, a container for a liquid provided with a device according to the present invention;
figure 2 shows, on a larger scale and schematically, a detail of figure 1, and
figure 3 shows, on an enlarged scale as well and schematically, an alternative embodiment of a device according to the present invention.

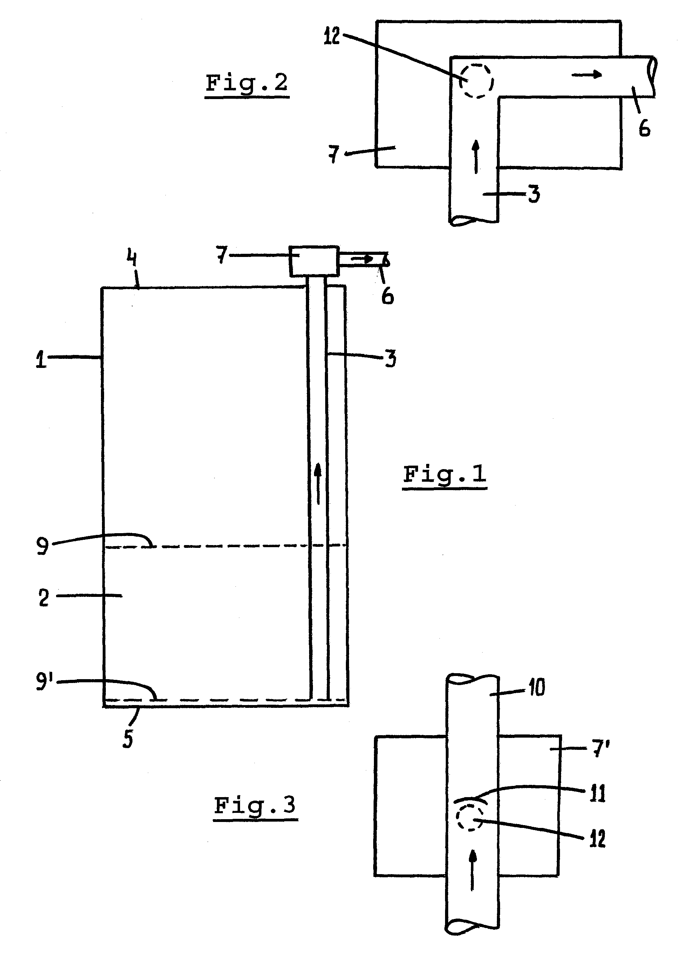

Firstly referring to figure 1, a container 1 is illustrated (which, for example may comprise a barrel) for a liquid 2, for example a cleaning substance as used with industrial dish washers. A riser 3 extends through a top wall 4 of the container 1 vertically downwards towards a bottom wall 5 of the container 1. In a manner known per se, the lower end of the riser 3 is provided with at least one opening (not illustrated in detail) for sucking in the liquid 2.

A delivery line 6 connects to the upper end of the riser 3 and is meant for delivering the liquid to a desired location (such as for example, an industrial dishwasher).

Not illustrated are pumping means, by means of which a liquid flow from within the container 1 into the riser 3 and towards the delivery line 6 is created. Such pumping means can be positioned at several location, such as in the riser 3, in the delivery line 6, at the connection between the riser 3 and delivery line 6, or elsewhere.

Finally, figure 1 shows schematically a device 7 for detecting the presence of a gas in the liquid flow through the riser 3 and delivery line 6. This device 7 has been represented schematically in figure 2 on a larger scale.

Referring to figure 2, the upper end of the riser 3 is shown connected to the beginning of the delivery line 6. The angle between the riser 3 (which extends substantially vertically) and the delivery line 6 (which extends substantially horizontally) is about 90°. At the bend created thus, a detector 12 is positioned adjacent the liquid line defined by the riser 3 and delivery line 6. This detector 12 is capable of distinguishing between a liquid and a gas and is positioned such, that it monitors the liquid flow through the liquid line.

Examples of detectors capable of such a distinction between a liquid and a gas comprise capacity detectors, detectors operating on the bases of light transmission, conductivity, ultrasonic sound or alike. Some types of detectors do not need any physical contact with the liquid flow in the liquid line, whereas other types will need so. An example of a capacity sensor is the capacitive sensor type BC10-QF5,5-AP6X2 marketed by the company Hans Turck GmbH & Co.KG from Mühlheim an der Ruhr, Germany.

At the bend between the riser 3 and delivery line 6 at least the flow of any gas in the liquid line will temporarily be slowed down (although it also would be possible to slow down the entire flow), such that the detector has enough time to reliably detect the presence of the gas. Further, it appears, that with the device according to the present invention such a detector also can make a distinction between small gas bubbles and large gas bubbles. Small gas bubbles may occur by the gasification in the liquid within the container 1 and thus do not necessarily mean, that the level 9 within the container 1 (see figure 1) has reached a very low position (9') indicating that the container 1 is nearly or completely empty. Large gas bubbles, however, generally will indicate, that the level 9' is very low or that the container 1 indeed is empty and needs replacing or refilling.

Figure 3 shows an alternative embodiment of a device 7' according to the present invention for detecting the presence of a gas in a liquid flow. In a liquid line 10 a restriction means 11 is positioned which will temporarily slow down the flow of any gas in the liquid line 10. Such a slowing down of the gas enables a detector 12 to determine the presence of such gas. Such a restriction means 11 (for example a wall section extending substantially transversally to the direction of liquid flow) may be provided as single means for temporarily slowing down the flow of gas, but also might be provided in combination with the bend according to figure 2.

Throughout the figures the direction of liquid flow has been indicated schematically by arrows.

The invention is not limited to the embodiments described before, which may be varied widely within the scope of the invention as defined by the appending claims.

## Claims

1. Device for detecting the presence of a gas in a liquid flow, **characterized by** a liquid line, a detector positioned alongside the liquid line and capable of distinguishing between a liquid and a gas, said detector monitoring the liquid flow through the liquid line, and retarding means for temporarily slowing down the flow of any gas in the liquid line in the immediate vicinity of the detector.

2. Device according to claim 1, wherein the retarding means comprise a bend in the liquid line where, as seen in the direction of the liquid flow, a substantially vertical section of the liquid line is followed by a substantially horizontal section of the liquid line.

3. Device according to claim 2, wherein the angle between the vertical and horizontal liquid line sections is substantially 90°.

4. Device according to claim 1, 2 or 3, wherein the retarding means comprise restriction means positioned in the liquid line.

5. Device according to any of the previous claims, wherein the detector comprises a capacity detector.

6. Device according to any of the claims 1-4, wherein the detector is a detector operating on the basis of light transmission, conductivity, ultrasonic sound, or alike.

7. Apparatus for delivering a liquid from a container, comprising a riser positionable into the container and a delivery line connected to the riser, and further comprising pumping means for creating a liquid flow from the container into the riser and towards the delivery line, and provided with a device according to any of the previous claims.

8. Apparatus according to claim 7 and provided with a device according to claim 2, wherein the vertical liquid line section is part of the riser, whereas the horizontal liquid line section is part of the delivery line.

9. Assembly of container for a liquid and apparatus according to claim 7 or 8.

10. Assembly according to claim 9, wherein the liquid is a cleaning substance, such as for example for use with industrial dish washers.

11. Method for detecting the presence of a gas in a liquid flowing through a liquid line, **characterized by** temporarily slowing down the flow of any gas in the liquid line by retarding means, positioning a detector alongside the liquid line in the immediate vicinity of the retarding means, which detector is capable of distinguishing between a liquid and a gas, and monitoring the liquid flow through the liquid line by means of the detector.

12. Method according to claim 11, wherein the retarding means comprise a bend in the liquid line where, as seen in the direction of the liquid flow, a substantially vertical section of the liquid line is followed by a substantially horizontal section of the liquid line.

13. Method according to claim 12, wherein the angle between the vertical and horizontal liquid line sections is substantially 90°.

14. Method according to claim 11, 12 or 13, wherein the retarding means comprise restriction means positioned in the liquid line.

15. Method according to any of the claims 11-14, wherein the detector comprises a capacity detector.

16. Method according to any of the claims 11-14, wherein the detector is a detector operating on the basis of light transmission, conductivity, ultrasonic sound, or alike.
